**Europäisches Patentamt**

**European Patent Office**

**Office européen des brevets**

(11) Numéro de publication: **0 209 411**
**A1**

## (12) DEMANDE DE BREVET EUROPEEN

(21) Numéro de dépôt: 86401229.9

(22) Date de dépôt: 06.06.86

(51) Int. Cl.⁴: **G06K 11/06** , G01S 5/16 , F41G 3/22

Le titre de l'invention a t modifi (Directives relatives l'examen pratiqu l'OEB, A-III, 7.3)

(30) Priorité: 07.06.85 FR 8508638

(43) Date de publication de la demande: 21.01.87 Bulletin 87/04

(84) Etats contractants désignés: DE GB

(71) Demandeur: **THOMSON-CSF**
**173, Boulevard Haussmann**
**F-75379 Paris Cedex 08(FR)**

(72) Inventeur: **Reymond, Jean-Claude**
**THOMSON-CSF SCPI 19, avenue de Messine**
**F-75008 Paris(FR)**
Inventeur: **Boulart, Olivier**
**THOMSON-CSF SCPI 19, avenue de Messine**
**F-75008 Paris(FR)**

(74) Mandataire: **Trocellier, Roger et al**
**THOMSON-CSF SCPI 19, avenue de Messine**
**F-75008 Paris(FR)**

(54) Système de commande à distance d'une marque sur un écran.

(57) Le système selon l'invention permet à un opérateur portant un casque (1) de déplacer une marque (21) sur un écran de visualisation (20) par de simples mouvements de la tête.

Il comprend un générateur de symboles (26) et un circuit de calcul (30) pour visualiser tous les points de la marque qui se déplace sur l'écran. Le circuit de calcul reçoit des signaux d'écartométrie - (X₁, Y₁) fournis à partir d'un simple détecteur optique (2) solidaire du casque, et orienté vers une source ponctuelle de lumière (3) fixe et placée aux environs de l'écran, et elle-même orientée vers le détecteur. Les signaux d'écartométrie corespondent au dépointage angulaire du détecteur par rapport à la source ponctuelle. La marque est ainsi déplacée en fonction des mouvements de la tête de l'opérateur.

Application à la commande d'ordres à distance, en particulier à bord d'un aéronef.

FIG_1

## SYSTEME DE COMMANDE DE POSITIONNEMENT D'UNE MARQUE SUR UN ECRAN ET APPLICATION A LA COMMANDE D'ORDRES A DISTANCE

L'invention concerne la commande à distance de la position d'une marque sur l'écran d'un dispositif de visualisation, sans faire appel à une commande manuelle. Une application est prévue en navigation aérienne; elle permet au pilote d'aéronef de donner des ordres sur l'écran d'une visualisation de commande, par désignation visuelle, assurant ainsi la fonction d'un clavier.

Les pilotes se servent généralement de leurs mains et de leurs pieds pour commander les divers organes de navigation et de commande de leur aéronef. Ces quatre membres sont occupés pratiquement sans interruption, de sorte que les pilotes n'ont pas la possibilité de les utiliser pour donner des ordres complémentaires ou occasionnels. De plus, ces systèmes de commande d'ordres complémentaires nécessitent des claviers compliqués qui occupent une place importante et précieuse sur le tableau de bord.

L'invention propose de réaliser un système de commande par visualisation, c'est-à-dire de placer et déplacer une marque sur un écran de commande en différents endroits représentant chacun un ordre déterminé. Le déplacement de la marque doit donc être commandé par les mouvements d'un organe de commande actionné, non pas par les pieds ou les mains de l'opérateur mais par une autre partie de son corps, c'est-à-dire la tête sur laquelle il porte un casque. Le pilote peut ainsi grâce à son casque, déplacer la marque sur l'écran par de simples mouvements de la tête.

Il est connu d'une part de visualiser une marque sur l'écran d'un dispositif de visualisation cathodique au moyen d'un générateur de symbole et d'un circuit de commande de la position de la marque recevant des consignes de déplacement élaborées manuellement ou automatiquement.

D'autre part, le brevet français publié sous le N° 2 293 714, décrit un système opto-électrique de localisation angulaire d'une cible. Il comporte un émetteur optique à impulsions pour illuminer une cible, et un récepteur à rayonnement transmis et réfléchi par la cible. Le récepteur comporte un détecteur photo-électrique plan à plusieurs éléments détecteurs répartis symétriquement selon quatre quadrants de mesure, et connectés à des circuits de réception. Ces circuits comportent en outre un circuit de mesure des écarts en site et en gisement de la cible détectée.

Un premier objet de l'invention est un système de commande de position d'une marque sur l'écran d'un dispositif de visualisation tel que revendiqué (revendication 1).

Un deuxième objet de l'invention est une utilisation du système défini au paragraphe précédent, pour la commande d'ordres à distance utilisant un écran de commande visualisée et tel que revendiquée (revendication 7).

Les particularités et advantages de l'invention apparaîtront dans la description qui donnée à titre d'exemple et accompagnée des figures annexées qui représentent:

-Fig. 1, le schéma synoptique d'un système de commande et de position de la marque selon l'invention;

-Fig. 2, un schéma explicatif concernant le fonctionnement du détecteur utilisé dans le système conformément à l'invention;

-Fig. 3, un diagramme relatif au circuit d'écartométrie et au circuit de traitement utilisés dans un système conformément à l'invention;

-Fig. 4, un schéma d'un système de commande d'ordres à distance selon l'invention.

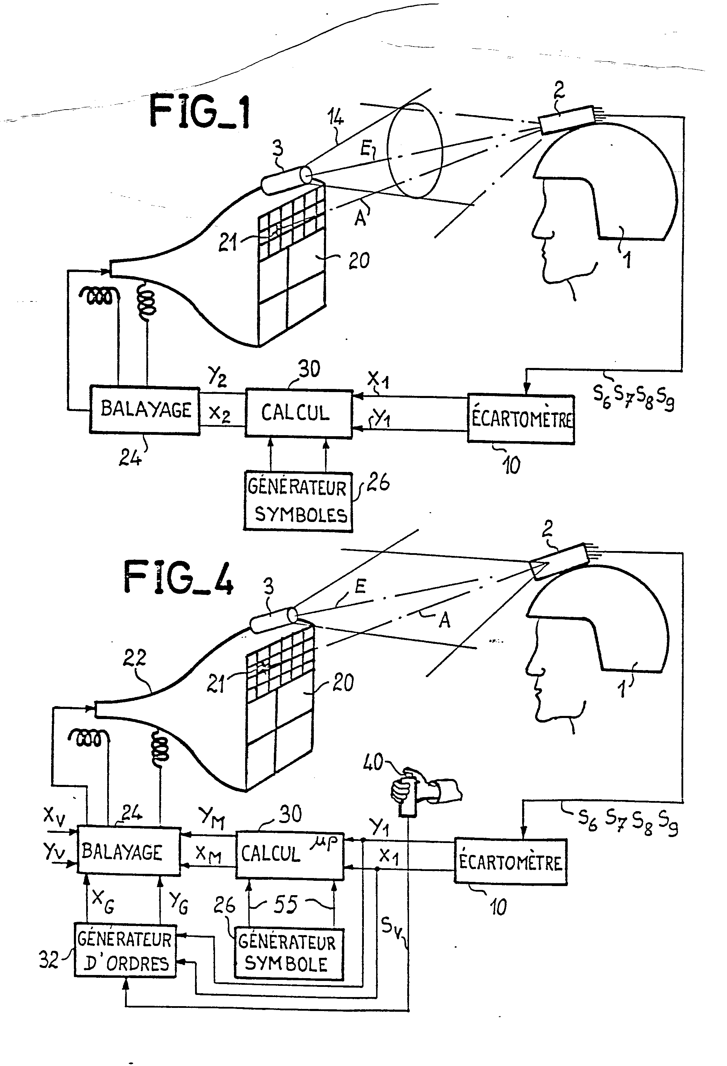

Le système de commande de position d'une marque sur un écran de visualisation et représenté sur la figure 1, comprend principalement, en premier lieu et selon l'art antérieur, un dispositif de visualisation cathodique. Ce dernier se compose d'un tube cathodique 22 et de son écran 20, et d'un circuit de balayage 24. Un générateur de symbole 26 pour visualiser la marque et des moyens de commande de déplacement de la marque sur l'écran sont également prévus.

En second lieu et selon l'invention le système comprend des moyens de détection 2 et 3 de l'orientation du casque 1 d'un opérateur et délivrant des signaux de détection S6, S7, S8 et S9. Il comprend également un circuit d'écartométrie 10 délivrant les signaux d'écartométrie $X_1$, $Y_1$ et un circuit de calcul 30. Ce dernier reçoit d'une part, des signaux SS, issus du générateur de symboles et correspondant à la marque à visualiser, et des signaux d'écartométrie $X_1$, $Y_1$ correspondant à la position de la marque. Il élabore les coordonnés $X_M$, $Y_M$ des points à visualiser, lesquelles sont appliquées au circuit de balayage.

Les moyens de détection de l'orientation du casque sont constitués par un émetteur électroluminescent 3 de lumière infrarouge d'axe E définissant un cône d'émission 14, fixe par rapport au système de référence que représente l'écran, et d'un détecteur électro-optique tel qu'un photodétecteur à quatre quadrants 2, solidaire du casque 1, et placé dans le cône d'émission 14 défini par l'axe E de l'émetteur 3.

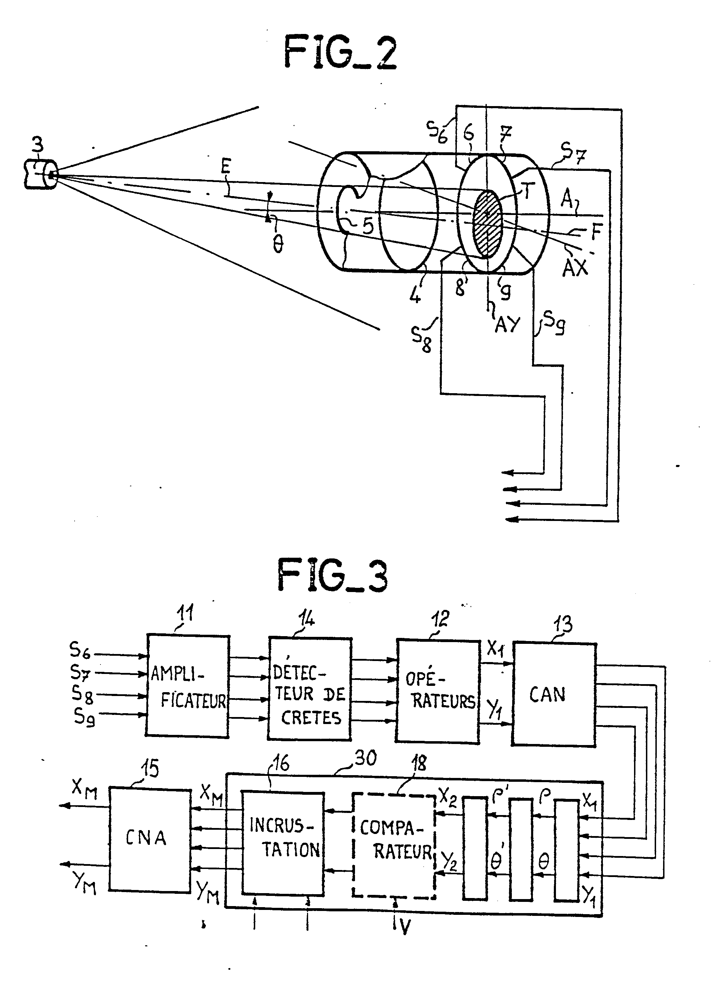

En référence à la figure 2, le photodétecteur comporte soit un simple trou, formé par un diaphragme 5 laissant passer le rayonnement lumineux, soit un objectif optique placé au même endroit pour focaliser le rayonnement sur les quatre quadrants. L'élément 4 figure un filtre optique dont la bande passante correspond à celle du spectre d'émission, et qui peut être placé en amont ou en aval du trou (ou de l'objectif) sur le trajet optique. Le détecteur 2 est placé en aval et comporte des éléments détecteurs 6, 7, 8 et 9 et par suite, autant de voies de détection et de réception S6, S7, S8 et S9. Ces éléments sont répartis dans un plan perpendiculaire à l'axe optique A du détecteur 2, et situé au voisinage du plan focal s'il s'agit d'une optique, et de manière à ce que le rayonnement soit reproduit selon une tache sensiblement circulaire, de diamètre déterminé sur ce plan, s'il s'agit du diaphragme 5.

Le nombre d'éléments détecteurs est de préférence égal à 4 de manière à simplifier au maximum l'équipement sans diminuer en rien ses performances. Les éléments sont répartis symétriquement par rapport à l'axe optique A et de part et d'autre de deux axes de référence AX et AY le long desquels s'effectuent les mesures d'écart en site et en gisement. Les quatre éléments 6, 7, 8 et 9 se trouvent ainsi situés respectivement dans quatre quadrants de mesures. Leurs surfaces conjuguées déterminent l'aire totale utile de détection qui est centrée sur la trace de l'axe optique A. La position du centre de la tache T, représentant le rayonnement de l'émetteur 3, est fonction du dépointage angulaire θ entre la direction E du rayonnement, et celle de l'axe optique A. Les signaux S6, S7, S8 et S9, issus respectivement des quatre quadrants 6, 7, 8, 9, permettent de calculer les coordonnées $X_1$ et $Y_1$ du centre de la tache par rapport aux axes de coordonnée AX et AY, et donc le dépointage angulaire de l'axe A. L'axe E du faisceau lumineux, passant par le centre du trou 5 et le centre de la tache T, et connaissant la distance fixe séparant ce trou de quatre quadrants, on en déduit l'orientation de l'axe A du détecteur par rapport à l'axe du faisceau de l'émetteur.

Le traitement des signaux et le calcul permettant d'obtenir les coordonnées du centre de la tache, sont décrits en détail dans le brevet français publié sous le N° 2 293 714. Toutefois, les coordonnées $X_1$ et $Y_1$ sont de la forme:

$$\frac{(S_7 + S_9) - (S_6 + S_8)}{S_6 + S_7 + S_8 + S_9} \quad \text{pour } X_1$$

$$\frac{(S_7 + S_6) - (S_8 + S_9)}{S_6 + S_7 + S_8 + S_9} \quad \text{pour } Y_1$$

En référence à la figure 3 représentant les circuits d'écartométrie 10 et de traitement 30, les signaux issus des détecteurs traversent en premier lieu un amplificateur 11 puis un détecteur de crêtes 14 de façon à ce qu'ils puissent être exploitables. Ils sont ensuite appliqués à un ensemble de circuits opérateurs analogiques 12, en l'occurrence des sommateurs, soustracteurs et diviseurs, qui élaborent les coordonnées $X_1$ et $Y_1$ du centre de la tache T. Ces coordonnées sont ensuite numérisées dans un convertisseur analogique-numérique 13, pour être exploitable par le circuit de calcul 30, qui peut être un microprocesseur.

Plusieurs exploitations des coordonnées $X_1$ et $Y_1$ sont envisagées. La première consiste à tenir directement compte de ces coordonnées, une deuxième consiste à tenir compte de la dérivée de ces coordonnées, c'est-à-dire de considérer la vitesse de déplacement du casque.

Dans le premier cas, le programme de calcul du microprocesseur élabore directement les coordonnées $X_2$ et $Y_2$ de position de la marque sur l'écran, de façon à ce que celle-ci se trouve dans la direction de l'axe A du détecteur, ou de manière plus générale de façon à ce que son déplacement soit proportionnel au déplacement de l'axe A du détecteur par rapport à l'axe R de l'émetteur. En effet, si l'écran de visualisation est de petite taille, à un changement appréciable d'orientation du casque correspondrait pour la marque un déplacement plus important que la traversée de l'écran. Il est donc utile dans ce cas de n'obtenir qu'un déplacement restreint de la marque. Le carré repéré 16 symbolise l'incrustation du motif de la marque sur les coordonnées $X_2$, $Y_2$ du centre de celle-ci. Une fois élaborées, les coordonnées de tous les points de la marque $X_M$ $Y_M$, sont mises sous forme analogique dans un convertisseur numérique-analogique de sortie 15 et sont alors aptes à être utilisées, après amplification si nécessaire pour la visualisation.

Le dispositif de visualisation est de manière préférentielle un tube cathodique. Il est généralement utilisé simultanément pour les autres visualisations (imagerie de télévision, indicateur cartographique ou de navigation .....). Le circuit de balayage 24 peut alors recevoir les coordonnées $X_M$ et $Y_M$ de la position des points constituant la marque, et les signaux de commande $X_V$ et $Y_V$ correspondant à ces autres visualisations.

Un deuxième cas, où c'est la vitesse de déplacement du faisceau lumineux sur les quatre photodétecteurs qui est prise en compte, donc la vitesse de déplacement angulaire de l'axe A du détecteur, le microprocesseur élabore les coordonnées des dérivées instantanées des coordonnées $X_1$ et $Y_1$ du centre de la tache. On a choisi dans ce cas de commander les déplacements de la marque 21 proportionnellement à la vitesse de déplacement du détecteur. C'est-à-dire, si le casque 1 est déplacé très rapidement dans une direction déterminée, la marque sera déplacée sur l'écran dans une direction correspondante (de préférence la même) et d'une distance importante. S'il est déplacé lentement, la marque sera déplacée mais d'une courte distance.

Toujours dans ce cas, on prévoit un seuil déterminé de vitesse de déplacement V relativement faible, et en dessous duquel les faibles vitesses de déplacement du casque ne sont pas prises en compte. Ceci a pour conséquence que pour commander le déplacement de la marque 21 sur l'écran, le casque doit être bougé relativement vivement. Un circuit de comparaison 18 peut à cet effet être intercalé dans le circuit de calcul 30 avant l'incrustation en 16.

Il se trouve avantageux de transformer les coordonnées cartésiennes $X_1$ et $Y_1$ du centre de la tache en coordonnées polaires $\rho$, $\theta$. En effet ces deux valeurs peuvent être facilement dérivées et notées $\rho'$, et $\theta'$, $\rho'$ représentant la vitesse de déplacement du détecteur 2, donc du casque 1. Cette valeur $\rho'$ est comparée à la valeur de seuil de vitesse V. Si $\rho'$ est inférieur à cette valeur V, la marque n'est pas déplacée.

Dans tous les cas le microprocesseur assure l'élaboration numérique des signaux de commande de visualisation de la marque.

L'invention propose de réaliser un système de commande d'ordres à distance pour permettre à un pilote d'aéronef de donner des ordres en déplaçant une marque 21 sur un écran 20 par de simples mouvements de la tête. Sur le casque, est fixé le détecteur 2.

Les dispositifs de visualisation utilisés à bord des aéronefs sont en général du type cathodique. Les coordonnées $X_M$ et $Y_M$ élaborées par le circuit de calcul, sont appliquées au circuit de balayage 24 de ce tube. La visualisation des différentes zones de l'écran correspondant chacune à un ordre déterminé, est assurée par ce même circuit de balayage qui reçoit également d'autres signaux de visualisation issus d'appareils externes au système présenté ici (indicateur cartographique, générateur de symboles, .....) et élaborant d'autres éléments à visualiser.

La fonction clavier est remplacée par le système selon l'invention. Lorsque la marque est dans la zone choisie par le pilote, si ce dernier veut que l'ordre correspondant à la zone choisie soit prise en compte, comme s'il appuyait sur la touche d'un clavier de commande, des moyens de validation 40 sont à sa disposition. Ces derniers ne doivent demander au pilote qu'une action très brève, simple, ne monopolisant au minimum son attention et ses membres. Ils peuvent être constitués par un simple bouton poussoir situé sur un levier de commande de pilotage tel que le manche à balai. Ce bouton poussoir commande un interrupteur à deux états, sa position appuyée correspondant à la prise en compte de la position de la marque, et émet un signal de validation SV vers un générateur d'ordres 32 qui fournit les coordonnées $X_G$, $Y_G$ des points constituant la grille au circuit de balayage 24, et qui reçoit les coordonnées $X_1$ et $Y_1$ de la marque.

Le système de commande d'ordres à distance qui vient d'être décrit est utilisé à bord des aéronefs.

## Revendications

1. Système de commande de positionnement d'une marque sur un écran d'un dispositif de visualisation cathodique (20), comprenant un générateur (26) de la marque (21) et des moyens de commande de déplacement de la marque sur l'écran, le système étant caractérisé en ce que ces derniers comportent un détecteur optique (2) solidaire d'un casque (1) placé sur la tête d'un observateur et dont l'axe optique (A) est orienté vers une source ponctuelle de lumière (3) fixe et placée aux environs de l'écran de visualisation et elle-même orientée vers ledit détecteur, des circuits d'écartométrie (10) recevant les signaux issus dudit détecteur et élaborant des signaux d'écartométrie ($X_1$, $Y_1$) et un circuit de calcul (30) pour élaborer les signaux de position de la marque en fonction des signaux d'écartométrie de manière à déplacer la marque en fonction de l'orientation du détecteur et donc de la tête de l'observateur.

2. Système selon la revendication 1, caractérisé en ce que la source ponctuelle (3) est un émetteur infrarouge et que le détecteur optique (2) est un détecteur à quatre quadrants (6, 7, 8, 9) délivrant des signaux (S6, S7, S8, S9) correspondant à l'orientation de l'axe (A) du détecteur, les circuits d'écartométrie (10) recevant lesdits signaux pour calculer les coordonnées ($X_i$, $Y_i$) du centre de la tache (T) que forme le faisceau de la source ponctuelle sur les quatre quadrants.

3. Système selon la revendication 2, caractérisée en ce que le circuit de calcul (30) reçoit les signaux d'écartométrie ($X_i$, $Y_i$) et des signaux (S) issus du générateur de symboles (26) pour calculer les signaux ($X_M$, $Y_M$) correspondant aux coordonnées de tous les points visualisés pour représenter la marque (21).

4. Système selon la revendication 3, caractérisée en ce que lesdites coordonnées ($X_M$, $Y_M$) de la marque (21) et élaborées sur le circuit de calcul (30) sont calculées sur la base des dérivées partielles des coordonnées du centre de la tache (T) sur les quatre détecteurs (6, 7, 8, 9), et en ce qu'un circuit de comparaison (18) est prévu dans le circuit de calcul pour que les coordonnées de la position de la marque soient nulles si la vitesse de déplacement du centre de la tache est inférieure à une valeur (V) déterminée.

5. Système de commande d'ordres à distance par un opérateur portant un casque (1) et utilisant un système selon l'une quelconque des revendications précédentes, l'écran (20) étant partagé en différentes zones correspondant chacune à un ordre déterminé, caractérisé en ce qu'il comporte des moyens de validation (40) pour prendre en compte l'ordre désigné par la position de la marque (21).

6. Système selon la revendication 5 utilisé à bord d'un aéronef.

# FIG_1

| BALAYAGE | $X_2$ $Y_2$ | CALCUL 30 | $X_1$ $Y_1$ | ÉCARTOMÈTRE |

24

GÉNÉRATEUR SYMBOLES 26

$S_6 S_7 S_8 S_9$

10

# FIG_4

$X_V$ $Y_V$ BALAYAGE 24 $Y_M$ $X_M$ CALCUL 30 $\mu P$ $Y_1$ $X_1$ ÉCARTOMÈTRE

40

$S_6 S_7 S_8 S_9$

10

$X_G$ $Y_G$

GÉNÉRATEUR D'ORDRES 32

GÉNÉRATEUR SYMBOLE 26 55

$S_V$

# FIG_2

# FIG_3

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| Y | PROCEEDINGS OF SID, vol. 19, no. 4, 1978, pages 181-185, Los Angeles, US; L. RUSSO: "Helmet mounted visually coupled systems"<br>* Page 181, colonne de droite, lignes 6-18; page 183, colonne de gauche, ligne 20 - page 183, colonne de droite, ligne 12 * | 1-3 | G 06 K  11/06<br>G 01 S   5/16<br>F 41 G   3/22 |
| | --- | | |
| D,Y | FR-A-2 293 714 (THOMSON-CSF)<br>* Page 2, lignes 15-26 * | 1-3 | |
| | --- | | |
| Y | US-A-4 150 285 (BRIENZA et al.)<br>* Colonne 1, ligne 1 - colonne 2, ligne 44; figure 1 * | 1-3 | |
| | --- | | |
| A | US-A-4 209 255 (HEYNAN et al.)<br>* Résumé; figure 1 * | 1-6 | DOMAINES TECHNIQUES RECHERCHES (Int. Cl.4) |
| | --- | | G 06 K  11/06<br>G 01 S   5/16 |
| A | MICROPROCESSING AND MICROPROGRAMMING, vol. 14, no. 3/4, octobre-novembre 1984, pages 173-179, Amsterdam, NL; E.E.E. FRIETMAN et al.: "Eyeball-position-controlled communication system EPCOS"<br>* Page 174, colonne de gauche, ligne 13 - colonne de droite, ligne 19; figure 3 * | 3,5 | F 41 G   3/22<br>G 02 B  27/36<br>G 01 S   1/70<br>G 01 S   3/78 |
| | ---               -/- | | |

Le present rapport de recherche a été établi pour toutes les revendications

| Lieu de la recherche<br>LA HAYE | Date d'achevement de la recherche<br>09-09-1986 | Examinateur<br>CERVANTES J.P.J. |
|---|---|---|

Office européen
des brevets

Numero de la demande

EP 86 40 1229

| | | | |
|---|---|---|---|
| **DOCUMENTS CONSIDERES COMME PERTINENTS** | | | **Page 2** |
| Catégorie | Citation du document avec indication. en cas de besoin. des parties pertinentes | Revendication concernée | CLASSEMENT DE LA DEMANDE (Int. Cl.4) |
| A | SOCIETY FOR INFORMATION DISPLAY, 3rd National Symposium on Information Display, Technical Session Proceedings, février 1964, pages 122-134, San Diego, California, US; H.L. SNYDER et al.: "A comparison of joystick and helmet-mounted control systems for pursuit tracking" * Page 123, lignes 1-15 * | 1-6 | |
| | ----- | | |
| | | | DOMAINES TECHNIQUES RECHERCHES (Int. Cl.4) |

Le present rapport de recherche a été établi pour toutes les revendications

| Lieu de la recherche | Date d'achevement de la recherche | Examinateur |
|---|---|---|
| LA HAYE | 09-09-1986 | CERVANTES J.P.J. |